# EUROPÄISCHE PATENTSCHRIFT

(11) **EP 3 746 281 B1**
(45) Veröffentlichungstag und Bekanntmachung des Hinweises auf die Patenterteilung: **07.06.2023**
(21) Anmeldenummer: 19706394.4
(22) Anmeldetag: 01.02.2019
(51) Int. Cl.: B29C 48/16, B29C 44/24, B29C 44/34, B29C 48/285, B27N 3/28, B29C 48/49, B29C 48/06

(54) **WPC-EXTRUSIONSPROFIL UND VORRICHTUNG UND VERFAHREN ZU DESSEN HERSTELLUNG**
WPC EXTRUSION PROFILE AND APPARATUS AND PROCESS FOR PRODUCTION THEREOF
PROFILÉ EXTRUDÉ EN WPC ET DISPOSITIF ET PROCÉDÉ DE FABRICATION DUDIT PROFILÉ

(30) Priorität: 01.02.2018 DE 102018201579
(43) Veröffentlichungstag der Anmeldung: 09.12.2020
(73) Patentinhaber: Greiner Extrusion Group GmbH, 4542 Nussbach (AT)
(72) Erfinder: WEIERMAYER, Leopold, 4552 Wartberg/Krems (AT); ZORN, Franz, 4552 Wartberg/Krems (AT)
(74) Vertreter: Maikowski & Ninnemann Patentanwälte Partnerschaft mbB
(86) Internationale Anmeldenummer: PCT/EP2019/052512
(87) Internationale Veröffentlichungsnummer: WO 2019/149892

(56) Entgegenhaltungen:
- EP-A1- 2 602 086
- EP-A1- 2 641 720
- WO-A2-02/103113
- CN-A- 105 965 846
- JP-A- S51 150 579
- PL-A1- 412 386
- US-A1- 2002 165 289
- US-A1- 2009 181 207

## Beschreibung

Die Erfindung betrifft ein WPC-Extrusionsprofil mit mindestens einer ausgeschäumten Hohlkammer mit den Merkmalen des Anspruchs 1, eine Vorrichtung zu dessen Herstellung mit den Merkmalen des Anspruchs 7 und ein Verfahren zu dessen Herstellung mit den Merkmalen des Anspruchs 14.

WPC-Extrusionsprofile sind seit über 20 Jahren in der Anwendung bekannt. WPC ist ein relativ junger Werkstoff und bedeutet Wood-Plastic-Compound. Der Begriff "Wood" ist weit gespannt und betrifft viele natürlich wachsende Pflanzenfasern, neben Holz- auch Hanf-, Palm- u.a. Fasern. Diese Fasern sind in einer Kunststoffmatrix eingebettet, z.B. aus PVC, PP, PE, PET oder PS. Diese Kunststoffe finden sich auch im Haushaltsmüll in größeren Mengen. Derartige "Post Consumer Kunststoffe" können relativ einfach als Matrix-Kunststoffe eingesetzt werden, da bei der Weiterverarbeitung zu WPC keine sehr großen Anforderungen hinsichtlich Sortenreinheit und geringem Anteil an Verunreinigungen gestellt werden. Aus WPC werden häufig Extrusionsprofile durch Extrusion hergestellt. Haupteinsatzgebiete sind z.B. Terrassendielen, Gartenzaun-Latten und -Pfosten und andere Anwendungen, in der Mehrzahl für Außenanwendungen.

Ein sehr wichtiger Vorteil des Verbundwerkstoffs WPC ist die erhöhte Steifigkeit (E-Modul) aufgrund der pflanzlichen Verstärkungsfasern in der Matrix. Ein weiterer Vorteil ist der hohe Anteil an nachwachsenden Rohstoffen, sehr häufig beträgt dieser 40 bis 70, fallweise sogar bis 80 Gewichtsprozent. Nachteilig sind die hohe Dichte des Verbundwerkstoffes, also auch die Materialkosten, und die Anfälligkeit für mikrobakteriellen Abbau. Die Dichte ist vergleichsweise hoch, höher als jene der beiden Komponenten Pflanzenfaser und der Kunststoff für sich alleine, was sich auf den Preis pro Laufmeter niederschlägt. Der mikrobakterielle Abbau beruht hauptsächlich auf einer Reaktion der Pflanzenfasern mit Wasser unter Umwelteinflüssen (Schimmel, Vermodern, usw.).

Eine Maßnahme zur Verringerung der Extrusionsprofilkosten ist die Ausführung als WPC-Hohlextrusionsprofil. Die Außengeometrie bleibt erhalten und trägt bei einer zweckmäßigen Wanddicke weiterhin zu einer hohen Stabilität bei Biegebelastung bei. Das Trägheitsmoment sinkt nur mäßig, weil dieses durch die Querschnittsanteile mit großem Abstand zur neutralen Faser überproportional (d.h quadratisch) beeinflusst wird. Die Hohlräume im Profilinneren hingegen führen zu einer proportionalen Verringerung des Querschnittes und somit der Profilkosten und vermindern die Biegesteifigkeit des WPC-Extrusionsprofils nur mäßig. Die Hohlkammern führen jedoch zu einem weiteren Nachteil: Die Oberfläche des WPC-Extrusionsprofils wird etwa verdoppelt. Bleibt die Außenkontur und damit die Außenoberfläche des Extrusionsprofils unverändert, so entstehen zusätzlich Oberflächen an der Begrenzung der Hohlkammern sowie etwaiger Innenwände. Bei Außenanwendungen ist es fast unvermeidbar, dass in die Hohlräume Wasser eindringt und sich ansammelt. Wasser kann an den Stirnflächen, bei Bohrungen oder Beschädigungen, auch als Kondenswasser etc. in die Hohlkammern gelangen. Dieses Wasser trocknet kaum auf und führt unvermeidbar zu mikrobakteriellem Abbau.

Eine weitere Maßnahme zur Verringerung der genannten Nachteile, das Aufschäumen der WPC-Rezeptur, ist kaum zielführend.
· Das Schäumen des Verbundstoffes WPC ist nur auf den Kunststoffanteil, z.B. 30%, beschränkt. Außerdem wird das Treibmittel nur zum Teil ausgenützt, weil die Fasern die beim Schäumen entstehenden Bläschen "anstechen", was in der Folge zu einem verminderten Schäumgrad, zu unregelmäßiger Bläschenverteilung und erheblichen Lunkern führt.
· Hinsichtlich E-Modul nimmt dieser überproportional mit zunehmendem Schäumgrad ab, was zu starken Einbußen beim angestrebten Vorteil, der Verstärkungswirkung, führt.
· Außerdem entstehen durch das Verschäumen viele Poren und zusätzliche Oberflächen, so dass Wasser gut über beschädigte Poren ähnlich wie in einem Schwamm in die Tiefe vordringen kann und daher eine große Angriffsfläche für den mikrobakteriellen Abbau vorfindet.

Die US 2009/181207 A1 betrifft ein Extrusionsverfahren zur Herstellung eines geschäumten Zellulosefaser-Thermoplast-Verbundgegenstands, der eine äußere Hülle und einen zentralen Schaum aufweist. Die WO 02/103113 A2 betrifft einen Verbundwerkstoff mit einer Kernschicht und einer Deckschicht. EP 2 602 086 A1 betrifft ein Verfahren zur Herstellung eines Kunststoffhohlprofils. EP 2 641 720 A1 betrifft eine Kunststoff-Extrusionsvorrichtung zur Herstellung eines mit Dämmstoff ausgeschäumten Hohlkörpers. CN 105 965 846 A betrifft die Herstellung von aufgeschäumten Bodenkörpern aus Holz-Plastik mittels Coextrusion. US 2002/165289 A1 betrifft die Herstellung eines Plastik-Holzfaser Schaumprodukts.

Die Extrusionsprofile gemäß dieser Erfindung sollen vor allem die Vorteile des WPC-Werkstoffes (hoher E-Modul, hoher Anteil an nachwachsenden Rohstoffen u. a.) zur Geltung bringen und die angeführten Nachteile (hohes Gewicht je Laufmeter und mikrobakterieller Abbau u.a.) weitgehend vermeiden.

Diese Aufgabe wird durch ein WPC-Extrusionsprofil nach Anspruch 1 gelöst.

Dabei wird ein WPC-Material verwendet, bei dem Pflanzenfasern in eine Kunststoff-Matrix eingebettet sind. Das WPC-Material weist einen Anteil an natürlich wachsende Pflanzenfasern zwischen 30 bis 75 Gew--%, auf und die Matrix weist z.B. Polyvinylchlorid, Polyethylen, Polypropylen, Polyethylenterephthalat oder Polystyrol auf oder besteht daraus. Ferner weist das WPC-Extrusionsprofil mindestens eine ausgeschäumte Hohlkammer auf.

Dabei wird dann die mindestens eine Hohlkammer des WPC-Extrusionsprofils vollständig mit einem Schaum, insbesondere einem geschlossenporigen Schaum, ausgeschäumt, wobei der Schaum aus einem gleichen Kunststoff wie die Matrix des WPC-Materials besteht. Die Dichte des Schaums ist kleiner als 0,4 g/cm³ und die durchschnittliche Zellgröße des Schaums weist einen mittleren Durchmesser von kleiner als 0,4 mm auf. Das Aufschäumen des mindestens einen Hohlraums erfolgt dabei mit einem physikalisch wirkenden Treibmittel, insbesondere CO₂. Durch die Ausschäumung des mindestens einen Hohlraums wird verhindert, dass Flüssigkeit eindringt, ohne dass die Eigenschaften des Profils negativ verändert werden.

Dabei ist es vorteilhaft, wenn die Dichte des Schaums kleiner ist als 0,3 g/cm³ und die durchschnittliche Zellgröße des Schaums einen mittleren Durchmesser von weniger als 0,3 mm aufweist.

Als Pflanzenfasern können z.B. Holz, Hanf, Palmenfasern und / oder Stroh verwendet werden.

Zur Verbesserung der Rutschsicherheit kann das WPC-Extrusionsprofil eine Struktur, insbesondere eine Rillenstruktur auf mindestens einer Nutzfläche aufweisen.

Damit bei einer Ablängung des WPC-Extrusionsprofils die Stirnseiten einfarbig sind, sind in einer Ausführungsform die WPC-Komponente und die Schaumkomponente eingefärbt und weisen weitgehend die gleiche Farbe auf, so dass die Schnittflächen des Profils per Augenschein einen homogenen Eindruck vermitteln.

Die Aufgabe wird auch durch eine Extrusionsvorrichtung mit den Merkmalen des Anspruchs 7 gelöst. Die Extrusionsvorrichtung weist einen Hauptextruder für die Aufbereitung der WPC-Rezeptur auf. Ein Coextruder mit einer Begasungseinrichtung dient zur Aufbereitung der Schaumrezeptur, was zu einem Schäumprozess in mindestens einer Hohlkammer des WPC-Extrusionsprofils führt, wobei der Schaum, insbesondere ein geschlossenporiger Schaum, aus der gleichen Kunststoffart wie die Matrix besteht und die Vorrichtung so eingerichtet ist, dass die Dichte des Schaums kleiner als 0,4 g/cm³ ist und die durchschnittliche Zellgröße des Schaums einen mittleren Durchmesser von kleiner als 0,4mm aufweist und die Begasungseinrichtung (20) ein physikalisch wirkendes Treibmittel, insbesondere CO₂ einsetzt, und in einer Düse der Extrusionsvorrichtung ein Zuführkanal für die Schaummasse zunächst kontaktfrei einen Fließkanal für das WPC durchdringt und dann in einen Fließkanal für die Schaummasse übergeht.

In einer Ausführungsform weist der Hauptextruder einen Doppelschneckenextruder auf und / oder der Coextruder weist einen Einschneckenextruder für die Aufbereitung der Rezeptur für den Schaum auf.

Auch kann die Begasungseinrichtung ein physikalisch wirkendes Treibmittel einsetzen. Dabei kann in der Begasungseinrichtung als Treibmittel für den Schaum z.B. CO₂ in flüssiger Form mit einem genau definierten Gasstrom im Zylinderbereich des Coextruders in die Kunststoffschmelze hineindrückbar sein und das Treibmittel ist durch die Mischwirkung infolge der Rotation der Schnecke fein in der Kunststoffmasse verteilbar.

Auch kann austragseitig am Coextruder ein Schmelzekühler zur Verminderung der Massetemperatur und insbesondere nachfolgend ein statischer Mischer zur weitgehenden Vereinheitlichung der Massetemperatur vorgesehen sein.

In einer Ausführungsform werden die beiden Schmelzeströme aus dem Hauptextruder und dem Coextruder in einer Düse zusammengeführt, wobei die Düse fluchtend zum Hauptextruder angeordnet ist und der Coextruder seitlich in diese Düse hineinfördert und wobei in der Düse insbesondere der Fließkanal für das WPC-Extrusionsprofil weitgehend jenem für normale Hohlkammerprofile entspricht.

Auch kann in einer Ausführungsform in der Düse ein Fließkanal für die Schaummasse zunächst kontaktfrei jenen Fließkanal für die WPC-Masse, durchdringen und sich der Fließkanal anschließend so erweitern, dass der Querschnitt des Fließkanals auslaufseitig etwa 25 bis 50% des Querschnittes der Hohlkammer beträgt.

Der Fließkanal für die Schaummasse kann z.B. entweder bündig an der Stirnfläche der Düse münden oder etwa 3 bis 20 mm vor der Stirnfläche der Düse mit dem Fließkanal für die WPC-Masse zusammengelegt werden.

Die Aufgabe wird auch durch ein Extrusionsverfahren mit den Merkmalen des Anspruchs 14 gelöst.

Dabei wird
a) eine WPC-Rezeptur durch einen ein Hauptextruder aufbereitet und
b) eine Schaumrezeptur in einem Coextruder mit Begasungseinrichtung aufbereitet und mit einem physikalisch wirkenden Treibmittel versehen, was zu einem Schäumprozess in mindestens einer Hohlkammer des WPC-Extrusionsprofils führt, wobei der Schaum die gleiche Kunststoffart wie die Matrix des WPC aufweist oder aus ihr besteht und das Verfahren ist so eingerichtet, dass die Dichte des Schaums kleiner als 0,4 g/cm³ ist und die durchschnittliche Zellgröße des Schaums einen mittleren Durchmesser von kleiner als 0,4 mm aufweist aufweist und
c) die Begasungseinrichtung (20) ein physikalisch wirkendes Treibmittel, insbesondere CO₂ einsetzt.

Anhand eines beispielhaften Verbundprofils werden der Herstellvorgang und die hierfür erforderliche Extrusionslinie anhand von Figuren beschrieben. Dabei zeigt
- Fig. 1: eine Ausführungsform eines WPC-Extrusionsprofils mit ausgeschäumter Hohlkammer, konkret den Querschnitt einer Terrassen-Diele;
- Fig. 2: eine schematische Darstellung einer Extrusionslinie für die Extrusion eines WPC-Extrusionsprofils mit ausgeschäumter Hohlkammer unter Anwendung der Schäumtechnolgie mit physikalisch wirkendem Treibmittel.
- Fig. 3: eine Stirnansicht der Düse 23 gegen die Extrusionsrichtung für eine Ausführungsform der Fließkanalführung für die Schaumkomponente;
- Fig. 4: eine Schnittansicht der Düse 23, in Fig. 3 durch Schnitt A-A gekennzeichnet;
- Fig. 5: einen Ausschnitt aus der Stirnansicht der Düse 23 gegen die Extrusionsrichtung für eine andere Ausführungsform der Fließkanalführung für die Schaumkomponente;
- Fig. 6: einen Ausschnitt aus der Schnittansicht der Düse 23, in Fig. 3 durch Schnitt A-A gekennzeichnet, für die Fließkanalführung nach Fig. 5;
- Fig. 7: eine weitere Ausführungsform eines WPC-Extrusionsprofils mit ausgeschäumter Hohlkammer, mit Außenbeschichtung aus unverstärktem Kunststoff.

Da WPC-Extrusionsprofile 1 sehr häufig für die Gestaltung von Terrassen eingesetzt werden, wird diese Erfindung am Beispiel einer Terrassendiele und deren Fertigung in einem Extrusionsprozess beschrieben. Die Erfindung ist jedoch nicht auf Terrassenprofile 1 beschränkt, sondern ist für alle WPC-Extrusionsprofile 1 anwendbar, bei denen Hohlkammern 6 durch einen Schaum 3 ausgefüllt sein sollen. Zugrunde gelegt wird, dass WPC grundsätzlich für den angestrebten Einsatzzweck gut geeignet ist, wie das bei Terrassendielen der Fall ist.

Das WPC-Extrusionsprofil 1 wird gedanklich in einzelne Funktionseinheiten zerlegt, welche für sich optimiert werden können. Außerdem soll der Herstellprozess durch Extrudieren hinsichtlich Qualität und Herstellkosten der WPC-Extrusionsprofile 1 optimiert werden. Anhand eines Terrassenprofils 1 werden die typischen Funktionsmerkmale aufgezeigt und die Gesichtspunkte zu deren Optimierung diskutiert:
· Geringe Kosten je Laufmeter: Der Hauptkostenfaktor bei WPC-Extrusionsprofilen 1 sind die Materialkosten. Kleine Querschnitte des WPC-Extrusionsprofils 1 und eine niedrige Dichte des Materials sind anzustreben. Dabei sind jedoch auch weitere Eigenschaften des WPC-Extrusionsprofils 1 zu beachten, welche in Wechselwirkung zueinander stehen.
· Stabilität gegen äußere Belastungen: Bei Terrassenprofilen 1 ist eine hohe Steifigkeit gegen Durchbiegen zwischen den Balken der Unterkonstruktion eine Hauptanforderung. Der Hauptquerschnitt ist rechteckig. Dieser wird zunächst als Hohlkammerprofil ausgelegt. Die Wanddicke und gegebenenfalls auch die Profilhöhe können in gewissen Grenzen variiert werden, bis rechnerisch die erforderliche Biegesteifigkeit gewährleistet ist.

- Verringerung der Oberfläche als Angriffsfläche für den mikrobakteriellen Abbau: Der Hohlraum 6 wird bei den hier beschriebenen Ausführungsformen durch einen Hartschaum 3 ausgefüllt. Dieser ist nur aus Kunststoff ausgeführt, nämlich dem gleichen Kunststoff wie die Matrix der WPC-Rezeptur und nicht mit pflanzlichen Fasern verstärkt.
- Die pflanzlichen Fasern in der Schaum-Rezeptur
- würden nichts zur Verstärkung beitragen, andererseits jedoch den Schäumprozess behindern. Der Schaum 3 verhindert, dass Wasser in die Hohlkammern 6 eindringen kann. Eine geschlossene Zellstruktur ist besonders vorteilhaft, damit der Schaum 3 nicht ähnlich wie ein Schwamm Wasser ansaugen kann. Außerdem können bei ausgeschäumten WPC-Extrusionsprofilen 1 keine Kleinlebewesen oder Insekten etc. in die Hohlräume 6 eindringen und dort nisten.
- Die Dichte des Schaums 3 soll so gering als möglich sein, die Zellstruktur feinporig mit enger Verteilung der Porengröße. Prinzipiell kommen zwei Schäumprozesse in Frage, mit chemisch wirkenden Treibmitteln oder mit physikalisch wirkenden Treibmitteln. Der Prozess mit physikalisch wirkenden Treibmitteln ist vorteilhaft, weil damit geringere Dichten und eine feinporigere Zellstruktur erreichbar sind. Außerdem sind die Rezeptur- und Aufbereitungskosten beim "physikalischen Aufschäumen" geringer als beim "chemischen Aufschäumen".
- Auch bei geringer Dichte ist die Druckfestigkeit des Schaumes 3 ausreichend hoch, um Kräfte, welche auf die obere Fläche der Terrassen-Diele 1 einwirken (Möbel, Schritte etc.) abzuleiten und ein Eindellen oder Brechen der WPC-Wandung zu verhindern. Das Gesamt-Verbundprofil mit WPC-Außenwandung und reinem Kunststoffschaum 3 im Hohlraum 6 weist ein sehr günstiges Verhältnis von Biegesteifigkeit zu Metergewicht je Laufmeter bzw. Kosten je Laufmeter auf.
- Farbliche Gestaltung des Schaumes 3: Die Farbe soll zweckmäßigerweise gleich sein wie jene der umgebenden WPC-Wandung. Dadurch kann das Verlegen ähnlich sein wie bei Holz- oder Voll-WPC-Dielen. Sichtbare Stirnflächen der Dielen müssen nicht durch Endkappen verschlossen werden. Die WPC-Extrusionsprofile 1 können beliebig abgelängt werden, auch schräg oder geschwungen, und auch in der Breite beschnitten werden. Die Schnittfläche ist stets sauber geschlossen und die angepeilten Funktionen bleiben erhalten.
- Haptik der WPC-Extrusionsprofile 1: Die Dichte von Vollprofilen aus WPC ist üblicherweise größer als 1,0 g/cm³. Beim Hantieren mit derartigen WPC-Extrusionsprofilen 1, auch wenn der äußere Eindruck bei entsprechender Oberflächengestaltung jener von Holzprofilen entspricht, fällt der Gewichtsunterschied im Vergleich zu Holzprofilen deutlich auf. Trotz ähnlichen visuellen Eindrucks, ist die Haptik stark unterschiedlich. Wird infolge das Schaumanteils die durchschnittliche Dichte des WPC-Extruisonsprofils 1 auf etwa 0,6 bis 0,8 g/cm³ herabgesetzt, ist die Haptik sehr ähnlich jener bei Holzprofilen.
- Gestaltung der Sichtflächen: Bei Terrassen-Dielen 1 sind holzähnliche, eher grob gestaltete Oberflächenstrukturen weit verbreitet, welche die Rutschgefahr deutlich vermindern. Häufig wird eine Rillenstruktur extrudiert und die Oberfläche anschließend durch Schleifen, Bürsten oder Fräsen nachbearbeitet, so dass die Oberfläche matt ist und eine typische Struktur aufweist, welche jener von Holzprofilen sehr ähnlich ist. Eine unterschiedliche Rillenstruktur auf den beiden Hauptflächen von Dielen, hergestellt im Extrusionsprozess, wird in der Patentschrift EP 1524385 B1 beschrieben. In einer Ausführungsform kann eine Sichtfläche mit einer Rillenstruktur extrudiert werden und die andere eben. Die Rillenstruktur entspricht jener mit der höchsten Absatzmenge, die ebene Oberfläche kann durch eine mechanische Nachbearbeitung inline während der Extrusion an beliebige Kundenwünsche angepasst werden. Diese mechanische Nachbearbeitung kann auch offline an den bereits abgelängten Profilstangen erfolgen, wobei auch kleine Losgrößen berücksichtigt werden können. Neben einer abgeänderten Rillenstruktur kann auch ein für Holz typischer "Flader" durch einen Fräsvorgang nachgebildet werden. Diese Nachbearbeitung ist auch für vergleichsweise kleine Absatzmengen wirtschaftlich.
- Die oben angeführte mechanische Nachbearbeitung der Sichtflächen hat auch einen Nachteil. Die durch den Extrusionsvorgang weitgehend geschlossene Oberfläche - weil fast immer ein dünner Kunststofffilm die Holzpartikel abdeckt -führt zu einer eher kleinen Angriffsfläche der Pflanzenfasern für das Wasser. Infolge der Nachbearbeitung werden Kunststoffschichten abgetragen und wesentlich mehr Pflanzenfasern liegen direkt an der Oberfläche und können somit bei Freibewitterungsbedingungen mit dem Wasser reagieren. Es ist daher vorteilhaft, wenn nur jene Sichtfläche, welche tatsächlich die Trittfläche bildet, mechanisch nachbearbeitet wird und alle anderen Außenflächen des Profils die ursprünglich bei der Extrusion gebildete, geschlossene Oberfläche beibehalten.
- Für besonders langlebige WPC-Extrusionsprofile 1 empfiehlt sich eine Coextrusion mit einer dünnen Schicht aus unverstärktem Kunststoff. Diese Schicht ist ebenfalls bezgl. Farbe und Feinstruktur frei gestaltbar und verhindert den direkten Kontakt zwischen den Holzpartikeln mit der Umwelt. In diesem Fall dient das WPC im Profil 1 nur als verstärkende Komponente. Die äußere Oberfläche aus kompaktem Kunststoff und der Schaumkern in den Hohlkammern schützt die Holzpartikel gegen den mikrobakteriellen Abbau.

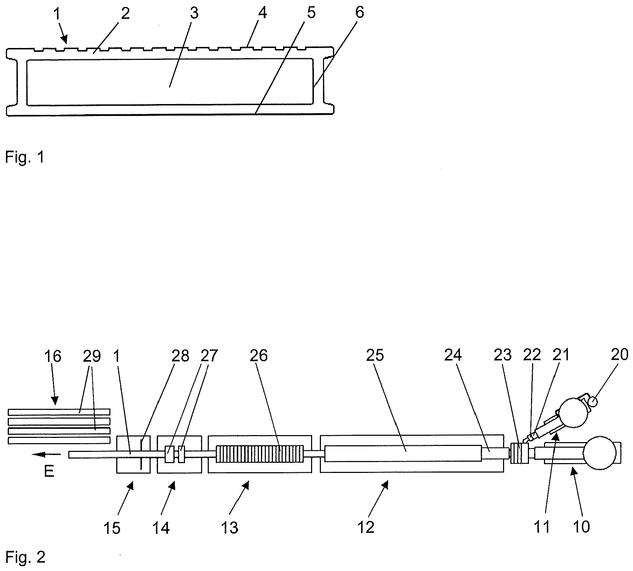

Die Fig. 1 zeigt eine Ausführungsform eines WPC-Extrusionsprofils 1, dargestellt anhand einer Terrassen-Diele.

Die Außenwand 2 des WPC-Extrusionsprofils 1 ist aus WPC und weist bei Dielen 1 aus Stabilitätsgründen meistens eine Wanddicke größer als ca. 4 mm auf.

In den WPC-Extrusionsprofilen 1 kommen Holzpartikel zum Einsatz, gemahlen auf definierte Feinheitsgrade von fein bis grob, aber auch Fasern anderer Pflanzen, wie z.B. aus Hanf, Palmen oder Stroh. Als Matrix werden gängige Kunststoffe verwendet, häufig PVC oder Polyolefine (Polyethylen, Polypropylen).

Dabei werden in dem vorliegenden Material Faseranteile zwischen 30 und 75 Gewichtsprozenten verwendet, weil einerseits eine spürbare Verstärkung bewirkt wird und andererseits noch ausreichend Kunststoff vorhanden ist, um die einzelnen Faserpartikel gut zu ummanteln und untereinander zu verkleben.

Die Hohlkammer 6 des WPC-Extrusionsprofils 1 ist zur Gänze ausgeschäumt. Dieser Schaum 3 wird dabei aus der gleichen Kunststoffart gebildet, welche als Matrix in der WPC-Rezeptur dient. Wenn also z.B. Polypropylen in der WPC-Rezeptur verwendet wird, wird Polypropylen auch zum Ausschäumen der Hohlkammer verwendet. Dadurch ist gewährleistet, dass der Schaum und die WPC-Außenwand untereinander verschweißen und fest miteinander verbunden sind.

Die dargestellte Ausführungsform der Terrassen-Diele 1 weist zwei unterschiedlich gestaltete Nutzflächen auf.

Bei der Ausführungsform gemäß Fig. 1 weist die obere Nutzfläche 4 des WPC-Extrusionsprofils 1 eine Rillenstruktur auf, die untere Nutzfläche 5 hingegen eine ebene Oberfläche. Dies erlaubt eine hohe Flexibilität bei der Oberflächengestaltung. Die obere Nutzfläche 4 weist jene Rillenstruktur auf, welche am häufigsten nachgefragt wird und wird daher zweckmäßigerweise gleich beim Extrudieren ausgeformt.

Die untere Nutzfläche 5 wird zunächst eben ausgeführt und kann durch mechanische Bearbeitungsvorgänge sowohl in eine Rillenstruktur als auch andere Strukturen umgewandelt werden.

Durch Bürsten, Schleifen, Fräsen oder Heißprägen können beide Oberflächen 4, 5 noch nachbearbeitet werden, um z.B. die Rutschhemmung zu erhöhen oder ein holzähnlicheres Aussehen zu bewirken. Bei der unteren Nutzfläche 5 verbleibt ein sehr breiter Gestaltungsspielraum, weil die Oberflächenbehandlung nach den angeführten Verfahren sowohl online als auch offline, auch nach längerer Zwischenlagerung, durchgeführt werden kann.

In Fig. 2 wird schematisch eine Ausführungsform einer Extrusionslinie zur Herstellung von ausgeschäumten WPC-Extrusionsprofilen 1 gezeigt, hier am Beispiel einer Terrassen-Diele. Die Beschreibung des Extrusionsvorganges folgt dem Materialfluss in Extrusionsrichtung E, beginnt also mit den Extrudern und endet bei den abgelängten Profilen, in Fig. 2 also von rechts nach links.

Als Hauptextruder 10 dient ein Doppelschnecken-Extruder mit gegensinnig drehenden Schnecken, welche sowohl konisch als auch parallel ausgeführt sein können. Dieser Hauptextruder 10 dient zur Aufbereitung der WPC-Rezeptur. Die besonderen Vorteile dieses Extruders im Hinblick auf die Verarbeitung von WPC-Extrusionsprofilen 1 sind: Hoher Druckaufbau, Zwangsförderung, gute Mischwirkung und "selbstreinigende Schnecken".

Zur Aufbereitung der Schaumrezeptur ist ein Coextruder 11 vorgesehen. Dieser wird bevorzugt schräg zum Hauptextruder 10 angeordnet, so dass die Schmelze etwa in einem Winkel von 30° in eine Düse 23 der Extrusionsvorrichtung eingeleitet wird. Dadurch weist die gesamte Extrusionslinie nur einen vergleichsweise geringen Platzbedarf in der Breite auf.

Als Coextruder 11 ist ein Einschnecken-Extruder mit einer Begasungsvorrichtung 20 vorgesehen. Er dient zur Aufbereitung der Schaumrezeptur. Die Begasungsvorrichtung 20 umfasst einen Gasspeicher und eine Hochdruckpumpe. Das Gas in flüssiger Form wird durch die Gaszuführung im Zylinder mit einem genau definierten Gasstrom in die Kunststoffschmelze hineingedrückt und bewirkt ein physikalisch aktiviertes Aufschäumen der Kunststoffschmelze nach Verlassen der Düse 23. Das Gas wird durch die rotierende Schnecke infolge Mischwirkung in der Schmelze fein verteilt. Nach dem Absinken des Schmelzedrucks am Ausgang der Düse schäumt das Gas auf und führt zum Schaum 3 des Kunststoffes. Das physikalisch aktivierte Aufschäumen hat im Vergleich zum chemisch aktivierten vor allem folgende Vorteile: Die Kosten für die Rezeptur einschließlich jener für das Gas und den Prozess für dessen Einarbeitung in die Schmelze sind um etwa 5% niedriger als für den Prozess mit chemisch aktiviertem Schaum. Es sind geringere Dichten erzielbar und die Porengröße ist feiner und enger verteilt. Bei Polyolefinen sind ohne weiteres Schaumdichten um 0,4 g/cm³ zu erreichen, bei optimierter Prozessführung erlaubt der eingesetzte Einschnecken-Coextruder Dichten unter 0,3 g/cm³. Das heißt auch, die Herstellkosten der WPC-Extrusionsprofile mit physikalisch aktiviertem Schaum sind niedriger als jene mit chemisch aktiviertem Schaum und die Schaumqualität ist besser.

Die Schaumstruktur des Schaumes 3 wird hinsichtlich Porengröße-Verteilung und Auftretens von Lunkern verbessert, je intensiver die Mischwirkung im Extruder ist. Eine intensive Mischung geht mit einer Erhöhung der Massetemperatur einher, der Wärmeinhalt der Schmelze steigt an. Da diese Wärme beim Kalibriervorgang des Profils infolge der Schaumstruktur nur schlecht nach außen abgeleitet werden kann, ist es zweckmäßig, bereits die Schmelze etwas abzukühlen. Außerdem ist eine vergleichsweise niedrige Schmelzetemperatur förderlich für eine gleichmäßige Schaumstruktur hinsichtlich kleiner Porengröße und deren Verteilung. Hierfür ist im Anschluss an den Coextruder und vor der Düse 23 ein Schmelzekühler 21 vorgesehen. Hier wird die Schmelze durch mehrere, parallel liegende Fließkanäle geführt, so dass diese Kontakt mit einer vergleichsweise großen Wandfläche hat, welche über Bohrungen mit einer Kühlflüssigkeit temperiert wird. Dieser Schmelzekühler 21 erlaubt eine Senkung der Schmelzetemperatur um bis zu 30°C. Da für ein gleichmäßiges Aufschäumen unter anderem eine gleichmäßige Schmelzetemperatur Voraussetzung ist, durchläuft die Schmelze nach dem Schmelzekühler 21 noch einen statischen Mischer 22, welcher zu einem weitgehend ebenen Temperaturprofil führt.

Die hier beschriebene Materialaufbereitung der Schaumrezeptur mit einem Einschnecken-Extruder 11 und dem Zudosieren eines physikalischen Treibmittels mit einer Hochdruckpumpe ist kostengünstiger als das Schäumverfahren mit chemischen Treibmitteln und führt gleichzeitig zu einer besseren Schaumqualität.

Die beiden Schmelzeströme aus Hauptextruder 10 und Coextruder 11 werden in der Düse 23 zusammengeführt. Die Düse 23 fluchtet mit dem Hauptextruder 10, der Coextruder 11 fördert die Schaummasse schräg seitlich in diese Düse 23 hinein. Fluchtend mit dem Hauptextruder 10 ist ein Kalibriertisch 12 angeordnet. Auf diesem ist die Kalibrierung montiert, welche mit Kühlwasser und Unterdruck versorgt wird. Die Kalibrierung besteht aus einer Trockenkalibrierung 24 und einer Nasskalibrierung 25. Der Kalibriertisch 12 ist in Längsrichtung verfahrbar, so dass die Trockenkalibrierung 24 mit einem Abstand von ca. 1 bis 10 mm an die Düse 23 anschließt.

In der Trockenkalibrierung 24 wird das WPC-Extrusionsprofil 1 mit Unterdruck an die Kalibratorwand angesaugt und dadurch gekühlt, wobei zunächst nur die äußeren Schichten einfrieren. Hier werden maßgeblich die Außenkontur und deren Oberflächenqualität des WPC-Extrusionsprofils 1 festgelegt.

In der Nasskalibrierung 25 wird das WPC-Extrusionsprofil in größeren Abständen mit Blenden oder Rollen weiterhin unterstützt und durch direkte Beaufschlagung mit Kühlwasser weiter abgekühlt.

Im Raupenabzug 13 wird das weitgehend abgekühlte WPC-Extrusionsprofil 1 zwischen zwei Raupen 26 geklemmt und in Extrusionsrichtung E abgezogen.

In einer Oberflächen-Bearbeitungseinheit 14 erfolgt eine mechanische Bearbeitung der Sichtflächen des WPC-Extrusionsprofils 1 durch Bearbeitungs-Aggregate 27 für Bürsten, Schleifen oder Fräsen. Diese Oberflächen-Bearbeitungseinheit 14 kann auch vor dem Raupenabzug 13, bezogen auf die Extrusionsrichtung E, angeordnet sein. Durch Schleifen, Fräsen und/oder Bürsten wird eine holzähnliche Oberfläche erzeugt, indem die äußere, mehr oder weniger glänzende Schicht des Profils, welche weitgehend aus dem Matrix-Kunststoff gebildet ist, abgetragen wird, so dass viele Pflanzenfasern direkt an der Oberfläche liegen.

Durch Fräsen können Längsrillen in der zunächst ebenen, unteren Nutzfläche 5 hergestellt werden, welche sich bezüglich Form (Breite, Tiefe) und Teilung von den Nuten der oberen Nutzfläche 4 unterscheiden. Solche Dielen weisen dann zwei unterschiedliche Nutzflächen auf, wodurch sich die Gestaltungsmöglichkeit bei der Verlegung der Terrassen-Dielen 1 erhöht.

Anstelle von reinen Längsrillen können auch holzähnliche Maserungen in die zunächst ebene, untere Nutzfläche 5 hinein gefräst oder gebürstet werden, wenn die Breiten- und Tiefenpositionen von mehreren schmalen Bürst- oder Frässcheiben gegenüber dem linear durchlaufenden Profil 1 entsprechend angesteuert werden.

Mit einer Trenneinheit 15 wird das WPC-Extrusionsprofil 1 mittels Sägeblatt 28 abgelängt. Die einzelnen Profilstangen bzw. -leisten 29 werden dann auf einem Querförderer 16 zwischengelagert, wo sie in einem Luftstrom weiter abkühlen. Sobald die mittlere Temperatur zuverlässig unter etwa 40°C liegt, können die Profile in Container abgelegt und in ein Lager gebracht werden.

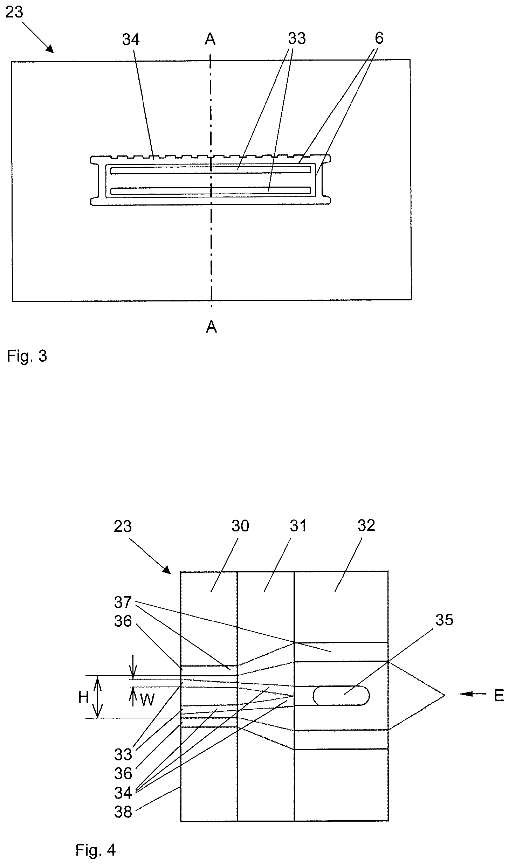

Fig. 3 zeigt eine Stirnansicht der Düse 23 gegen die Extrusionsrichtung für eine Ausführungsform der Fließkanalführung für die Schaumkomponente. Das WPC verlässt die Düse durch den Austrittsspalt 34, der Schaum durch 2 Austrittsspalte 33. Die zunächst noch kompakte Schmelze für den Schaum beginnt nach dem Absinken des Schmelzedruckes am Düsenende sofort aufzuschäumen, so dass nach kurzer Entfernung von der Düse (etwa 10 bis 50mm) die Hohlkammer 6 komplett ausgefüllt ist.

Fig. 4 zeigt eine Schnittansicht der Düse 23, in Fig. 3 durch Schnitt A-A gekennzeichnet, dargestellt ist nur der auslaufseitige Teil der Düse bestehend aus den Düsenplatten 30 bis 32. Der Fließkanal 37 für das WPC in der Düse 23 entspricht weitgehend jenem für normale WPC-Hohlkammerprofile und mündet durch den Austrittsspalt 36 an der Düsenstirnfläche 38 ins Freie. Der Zuführkanal 35 für die Schaummasse durchdringt zunächst "kontaktfrei" den Fließkanal 37 für das WPC und geht dann in den Fließkanal 34 für die Schaummasse über. Letzterer teilt sich auf 2 Kanäle auf, welche durch 2 Austrittsspalte 33 ebenfalls an der Düsenstirnfläche im Düsen-Kernbereich für den Hohlraum 6 münden. Die Höhe H des Hohlraumes dient zur Bemessung der Spaltweite W für die beiden Austrittsspalte 33: Die Strömungsgeschwindigkeit der kompakten Schaummasse im Austrittsspalt soll etwa gleich sein wie die Abzugsgeschwindigkeit des Profils. Das bedeutet, dass die Volumenzunahme beim Schäumen nur in radialer Richtung erfolgt. Nimmt die Dichte des Schaumes beim Aufschäumen z.B. auf 1/3 der Dichte der kompakten Schaummasse ab, dann soll die Summe der beiden Austrittsspalte 33 ebenfalls nur 1/3 des Querschnittes der Hohlkammer betragen. Bei den Größenverhältnissen in Fig. 4 bedeutet das formelmäßig in guter Näherung: W = H/6.

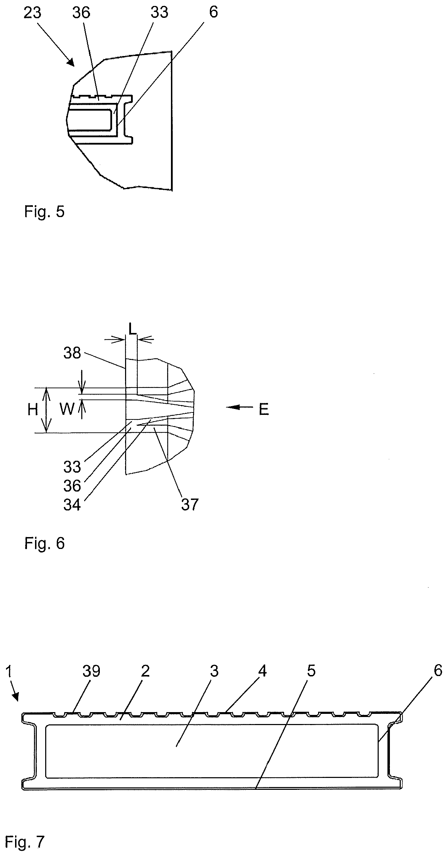

Beide Fließkanäle münden üblicherweise am Düsenende, an der Stirnfläche der Düse 23, ins Freie. Es ist aber auch zweckmäßig, die beiden Fließkanäle schon kurz vor dem Düsenende zusammenzuführen, etwa 5 bis 20 mm vor der Stirnfläche, was durch die beiden Fig. 5 und 6 veranschaulicht wird.

Fig. 5 zeigt einen Ausschnitt aus der Stirnansicht der Düse 23 gegen die Extrusionsrichtung für eine andere Ausführungsform der Fließkanalführung für die Schaumkomponente. Die Austrittsspalte 33 und 36 für die Schaummasse bzw. für das WPC bilden im Austrittsbereich, etwa 3 bis 20mm vor der Stirnfläche 38 der Düse einen gemeinsamen Spalt. Das ist in Fig. 6 besser erkennbar.

Fig. 6 zeigt einen Ausschnitt aus der Schnittansicht der Düse 23 für die Fließkanalführung nach Fig. 5. Die Fließkanäle 34 und 37 für die Schaummasse und das WPC werden im gezeigten Beispiel vor der Stirnfläche der Düse zusammengeführt, das Maß L im konkreten Beispiel beträgt ca. 8mm, so dass die beiden Austrittspalte 33 und 36 einen gemeinsamen Fließkanal bilden und die beiden Schmelzeströme direkten Kontakt zueinander haben. Dadurch vereinigen sich die beiden Materialien unter höherem Druck, etwa 5 bis 40 bar je nach Spaltweite und -länge in diesem gemeinsamen Fließkanal, was zu einer besonders guten Haftung zwischen der WPC-Außenwandung und der innenliegenden Schaumkomponente führt. Die äußere Oberfläche des WPC-Extrusionsprofils 1 wird dadurch besonders glatt, riss- und porenfrei, vor allem dann, wenn (ca. 10 bis 30 mm vor Düsenende) die äußere Fließkanalwand im Austrittsbereich durch ein Kühlmedium gekühlt wird, was hier aber nicht näher erläutert wird.

Fig. 7 zeigt eine weitere Ausführungsform eines WPC-Extrusionsprofils mit ausgeschäumter Hohlkammer. Hier ist die Außenfläche des Profils mit einer Beschichtung 39 aus unverstärktem Kunststoff der gleichen Art wie die WPC-Matrix versehen, entweder umlaufend um das ganze Profil herum oder nur bereichsweise, z.B. nur an den beiden Nutzflächen, versehen. Diese Beschichtung verhindert den direkten Kontakt der Holzpartikel bzw. sonstigen, natürlichen Fasern mit der Umgebung. Diese Partikel sind daher nicht unmittelbar den Umwelteinflüssen ausgesetzt, wodurch einem mikrobakteriellen Abbau deutlich entgegengewirkt wird. Für das Aufbringen dieser Beschichtung ist ein weiterer Coextruder erforderlich. Auf die erforderliche Erweiterung der Extrusionslinie und des Verfahrens wird hier jedoch nicht näher eingegangen.

### Bezugszeichenliste

- 1: WPC-Extusionsprofil, Terrassen-Diele
- 2: Außenwand
- 3: Schaum, der Hohlkammer ausfüllt
- 4: obere Nutzfläche, mit Rillenstruktur
- 5: untere Nutzfläche, eben
- 6: Kontur der Hohlkammer

- 10: Hauptextruder
- 11: Coextruder mit Begasungsvorrichtung
- 12: Kalibriertisch
- 13: Raupenabzug
- 14: Oberflächen-Bearbeitungseinheit
- 15: Trenneinheit
- 16: Querförderer

- 20: Begasungsvorrichtung
- 21: Schmelzekühler
- 22: statischer Mischer
- 23: Düse
- 24: Trockenkalibrierung
- 25: Nasskalibrierung
- 26: Raupen
- 27: Bearbeitungs-Aggregate
- 28: Sägeblatt
- 29: abgelängte Profilstangen bzw. -leisten
- 30: 1. Düsenplatte
- 31: 2. Düsenplatte
- 32: 3. Düsenplatte
- 33: Austrittsspalt für die Schaummasse
- 34: Fließkanal für die Schaummasse
- 35: Zuführkanal für die Schaummasse
- 36: Austrittspalt für die WPC-Rezeptur
- 37: Fließkanal für das WPC
- 38: Stirnfläche der Düse
- 39: Beschichtung aus unverstärktem Kunststoff

- E: Extrusionsrichtung

## Patentansprüche

1. WPC-Extrusionsprofil (1) mit einem WPC-Material, bei dem Pflanzenfasern in eine Kunststoffmatrix eingebettet sind, wobei das WPC-Material einen Anteil an natürlich wachsenden Pflanzenfasern zwischen 30 bis 75 Gew--%, aufweist und das WPC-Extrusionsprofil (1) mindestens eine ausgeschäumte Hohlkammer (3, 6) aufweist,
**dadurch gekennzeichnet, dass**
die mindestens eine Hohlkammer (6) des WPC-Extrusionsprofils (1) vollständig mit einem Schaum (3), insbesondere einem geschlossenporigen Schaum (3), ausgefüllt ist und der Schaum (3) aus einem Kunststoff gleicher Kunststoffart wie die Matrix des WPC-Materials besteht und dass das Aufschäumen mit einem physikalisch wirkenden Treibmittel, insbesondere CO₂, erfolgt und die Dichte des Schaums (3) kleiner ist 0,4 g/cm³ und die durchschnittliche Zellgröße des Schaums (3) einen mittleren Durchmesser von kleiner als 0,4 mm aufweist.

2. WPC-Extrusionsprofil (1) nach Anspruch 1, **dadurch gekennzeichnet, dass** die Matrix einen Anteil an Polypropylen, Polyethylen und / oder Polyethylenterephthalat aufweist oder aus diesen Materialen besteht.

3. WPC-Extrusionsprofil (1) nach Anspruch 1 oder 2, **dadurch gekennzeichnet, dass** die Dichte des Schaums (3) kleiner ist als 0,3 g/cm³ und die durchschnittliche Zellgröße des Schaums einen mittleren Durchmesser von weniger als 0,3 mm aufweist.

4. WPC-Extrusionsprofil (1) nach mindestens einem der vorhergehenden Ansprüche, **dadurch gekennzeichnet, dass** die Pflanzenfasern Holz, Hanf, Palmenfasern und / oder Stroh aufweisen.

5. WPC-Extrusionsprofil (1) nach mindestens einem der vorhergehenden Ansprüche, **dadurch gekennzeichnet, dass** mindestens eine Nutzfläche (4) eine Struktur, insbesondere eine Rillenstruktur aufweist.

6. WPC-Extrusionsprofil nach mindestens einem der vorhergehenden Ansprüche, **dadurch gekennzeichnet, dass** die WPC-Komponente und die Schaumkomponente eingefärbt sind und weitgehend die gleiche Farbe aufweisen, so dass die Schnittflächen des Profils per Augenschein einen homogenen Eindruck vermitteln.

7. Extrusionsvorrichtung zur Herstellung von einem WPC-Extrusionsprofil (1) mit einem WPC-Material, bei dem Pflanzenfasern in eine Kunststoffmatrix eingebettet ist, mindestens nach einem der vorhergehenden Ansprüche,
**dadurch gekennzeichnet, dass**
ein Hauptextruder (10) für die Aufbereitung der WPC-Rezeptur eingesetzt wird und ein Coextruder (11) mit Begasungseinrichtung (20) für die Aufbereitung der Schaummasse eingesetzt wird, was zu einem Schäumprozess mit einem physikalisch wirkenden Treibmittel in mindestens einer Hohlkammer (6) des WPC-Extrusionsprofils (1) führt, wobei der Schaum (3) aus der gleichen Kunststoffart wie die Matrix besteht und die Vorrichtung so eingerichtet ist, dass die Dichte des Schaums (3) kleiner als 0,4 g/cm³ ist und die durchschnittliche Zellgröße des Schaums (3) einen mittleren Durchmesser von kleiner als 0,4mm aufweist und die Begasungseinrichtung (20) ein physikalisch wirkendes Treibmittel, insbesondere CO₂ einsetzt, und
in einer Düse (23) der Extrusionsvorrichtung ein Zuführkanal (35) für die Schaummasse zunächst kontaktfrei einen Fließkanal (37) für das WPC durchdringt und dann in einen Fließkanal (34) für die Schaummasse übergeht.

8. Extrusionsvorrichtung nach Anspruch 7, **dadurch gekennzeichnet, dass** der Hauptextruder (10) einen Doppelschneckenextruder aufweist und / oder der Coextruder (11) einen Einschneckenextruder für die Aufbereitung der Schaummasse aufweist.

9. Extrusionsvorrichtung nach Anspruch 8, **dadurch gekennzeichnet, dass** in der Begasungseinrichtung (20) als Treibmittel für den Schaum CO₂ in flüssiger Form mit einem genau definierten Gasstrom im Zylinderbereich des Coextruders (11) in die Kunststoffschmelze hineindrückbar ist und das Treibmittel durch die Mischwirkung infolge der Rotation der Schnecke fein in der Kunststoffmasse verteilbar ist.

10. Extrusionsvorrichtung nach mindestens einem der Ansprüche 7 bis 9, **dadurch gekennzeichnet, dass** austragseitig am Coextruder (11) ein Schmelzekühler (21) zur Verminderung der Massetemperatur und insbesondere nachfolgend ein statischer Mischer (22) zur weitgehenden Vereinheitlichung der Massetemperatur vorgesehen sind.

11. Extrusionsvorrichtung nach mindestens einem der Ansprüche 7 bis 10, **dadurch gekennzeichnet, dass** die beiden Schmelzeströme aus dem Hauptextruder (10) und dem Coextruder (11) in der Düse (23) zusammengeführt werden, wobei die Düse (23) fluchtend zum Hauptextruder angeordnet ist und der Coextruder seitlich in diese Düse hineinfördert und wobei in der Düse (23) insbesondere der Fließkanal (37) für das WPC-Extrusionsprofil weitgehend jenem für normale Hohlkammerprofile entspricht.

12. Extrusionsvorrichtung nach mindestens einem der Ansprüche 7 bis 11, **dadurch gekennzeichnet, dass** in der Düse (23) sich der an den Zuführkanal (35) anschließende Fließkanal (34) für die Schaummasse anschließend so erweitert, dass der Querschnitt des Austrittsspaltes (33) für die Schaummasse etwa 25 bis 50% des Querschnittes der Hohlkammer (6) beträgt.

13. Extrusionsvorrichtung nach mindestens einem der Ansprüche 7 bis 12, **dadurch gekennzeichnet, dass** der Fließkanal (34) für die Schaummasse entweder bündig an der Stirnfläche der Düse (23) mündet oder etwa 3 bis 20 mm vor der Stirnfläche der Düse (23) mit dem Fließkanal (37) für die WPC-Masse zusammengelegt wird.

14. Extrusionsverfahren zur Herstellung von WPC-Extrusionsprofilen (1) nach mindestens einem der Ansprüche 1 bis 6 unter Verwendung der Vorrichtung nach mindestens einem der Ansprüche 7 bis 13,
**dadurch kennzeichnet, dass**
a) die WPC-Rezeptur durch einen Hauptextruder (10) aufbereitet wird und
b) ein Coextruder (11) mit Begasungseinrichtung (20) für die Aufbereitung der Schaummasse eingesetzt wird, was zu einem Schäumprozess mit einem physikalisch wirkenden Treibmittel in mindestens einer Hohlkammer (6) des WPC-Extrusionsprofils (1) führt, wobei der Schaum (3) die gleiche Kunststoffart wie die Matrix der WPC-Rezeptur aufweist oder aus ihr besteht und das Verfahren so eingerichtet ist, dass die Dichte des Schaums (3) kleiner als 0,4 g/cm³ ist und die durchschnittliche Zellgröße des Schaums (3) einen mittleren Durchmesser von kleiner als 0,4 mm aufweist und aufweist und
c) die Begasungseinrichtung (20) ein physikalisch wirkendes Treibmittel, insbesondere CO₂ einsetzt.

## Claims

1. WPC extrusion profile (1) comprising a WPC material, in which plant fibres are embedded in a plastics matrix, wherein the WPC material comprises a proportion of naturally growing plant fibres of between 30 to 75% by weight and the WPC extrusion profile (1) has at least one foamed hollow chamber (3, 6),
**characterized in that**
the at least one hollow chamber (6) of the WPC extrusion profile (1) is filled completely with a foam (3), in particular a closed-pore foam (3), and the foam (3) consists of a plastic of the same type as the matrix of the WPC material, and **in that** the foaming is effected with a physically acting blowing agent, in particular CO₂, and the density of the foam (3) is less than 0.4 g/cm³ and the average cell size of the foam (3) has a mean diameter of less than 0.4 mm.

2. WPC extrusion profile (1) according to Claim 1, **characterized in that** the matrix comprises a proportion of polypropylene, polyethylene and/or polyethylene terephthalate or consists of these materials.

3. WPC extrusion profile (1) according to Claim 1 or 2, **characterized in that** the density of the foam (3) is less than 0.3 g/cm³ and the average cell size of the foam has a mean diameter of less than 0.3 mm.

4. WPC extrusion profile (1) according to at least one of the preceding claims, **characterized in that** the plant fibres comprise wood, hemp, palm fibres and/or straw.

5. WPC extrusion profile (1) according to at least one of the preceding claims, **characterized in that** at least one useful surface (4) has a structure, in particular a grooved structure.

6. WPC extrusion profile according to at least one of the preceding claims, **characterized in that** the WPC component and the foam component are coloured and largely have the same colour, such that, upon visual inspection, the interfaces of the profile give a homogeneous impression.

7. Extrusion apparatus for the production of a WPC extrusion profile (1) comprising a WPC material, in which the plant fibres are embedded in a plastics matrix, at least according to one of the preceding claims,
**characterized in that**
a main extruder (10) is used for the preparation of the WPC formulation and a coextruder (11) with gasifier (20) is used for the preparation of the foam composition, which leads to a foaming process with a physically acting blowing agent in at least one hollow chamber (6) of the WPC extrusion profile (1), wherein the foam (3) consists of the same type of plastic as the matrix and the apparatus is configured such that the density of the foam (3) is less than 0.4 g/cm³ and the average cell size of the foam (3) has a mean diameter of less than 0.4 mm and the gasifier (20) uses a physically acting blowing agent, in particular CO₂, and,
in a nozzle (23) of the extrusion apparatus, a feed channel (35) for the foam composition initially passes through a flow channel (37) for the WPC in a contact-free manner and then transitions into a flow channel (34) for the foam composition.

8. Extrusion apparatus according to Claim 7, **characterized in that** the main extruder (10) comprises a twin-screw extruder and/or the coextruder (11) comprises a single-screw extruder for the preparation of the foam composition.

9. Extrusion apparatus according to Claim 8, **characterized in that**, in the gasifier (20), CO₂ in liquid form, as blowing agent for the foam, can be pushed with a precisely defined gas stream in the barrel region of the coextruder (11) into the plastics melt and the blowing agent can be finely distributed in the plastics composition by the mixing effect due to the rotation of the screw.

10. Extrusion apparatus according to at least one of Claims 7 to 9, **characterized in that**, on the output side of the coextruder (11), a melt cooler (21) for the reduction of the melt temperature and, in particular successively, a static mixer (22) for the substantial standardization of the melt temperature are provided.

11. Extrusion apparatus according to at least one of Claims 7 to 10, **characterized in that** the two melt streams from the main extruder (10) and the coextruder (11) are brought together in the nozzle (23), wherein the nozzle (23) is arranged so as to be aligned with the main extruder and the coextruder conveys laterally into this nozzle, and wherein, in the nozzle (23), in particular the flow channel (37) for the WPC extrusion profile corresponds largely to that for normal hollow chamber profiles.

12. Extrusion apparatus according to at least one of Claims 7 to 11, **characterized in that**, in the nozzle (23), the flow channel (34) for the foam composition, said flow channel adjoining the feed channel (35), subsequently widens such that the cross section of the outlet gap (33) for the foam composition is approximately 25 to 50% of the cross section of the hollow chamber (6).

13. Extrusion apparatus according to at least one of Claims 7 to 12, **characterized in that** the flow channel (34) for the foam composition either opens out flush with the end face of the nozzle (23) or is merged with the flow channel (37) for the WPC composition approximately 3 to 20 mm upstream of the end face of the nozzle (23).

14. Extrusion method for the production of WPC extrusion profiles (1) according to at least one of Claims 1 to 6 using the apparatus according to at least one of Claims 7 to 13,
**characterized in that**
a) the WPC formulation is prepared by a main extruder (10), and
b) a coextruder (11) with gasifier (20) is used for the preparation of the foam composition, which leads to a foaming process with a physically acting blowing agent in at least one hollow chamber (6) of the WPC extrusion profile (1), wherein the foam (3) comprises or consists of the same type of plastic as the matrix of the WPC formulation and the method is configured such that the density of the foam (3) is less than 0.4 g/cm³ and the average cell size of the foam (3) has a mean diameter of less than 0.4 mm and has, and
c) the gasifier (20) uses a physically acting blowing agent, in particular CO₂.

## Revendications

1. Profilé d'extrusion WPC (1) comprenant un matériau WPC dans lequel des fibres végétales sont noyées dans une matrice de matière synthétique, le matériau WPC comportant une proportion de fibres végétales à croissance naturelle comprise entre 30 et 75 % en poids et le profilé d'extrusion WPC (1) comportant au moins une chambre creuse (3, 6) remplie de mousse,
**caractérisé en ce que**
l'au moins une chambre creuse (6) du profilé d'extrusion WPC (1) est entièrement remplie d'une mousse (3), en particulier d'une mousse à pores fermés (3), et la mousse (3) est en une matière synthétique du même type de matière synthétique que la matrice du matériau WPC et **en ce que** le moussage est effectué avec un propulseur à action physique, en particulier du CO₂, et la densité de la mousse (3) est inférieure à 0,4 g/cm³ et la taille moyenne des cellules de la mousse (3) présente un diamètre moyen inférieur à 0,4 mm.

2. Profilé d'extrusion WPC (1) selon la revendication 1, **caractérisé en ce que** la matrice présente une proportion de polypropylène, de polyéthylène et/ou de téréphtalate de polyéthylène ou est en ces matériaux.

3. Profilé d'extrusion WPC (1) selon la revendication 1 ou 2, **caractérisé en ce que** la densité de la mousse (3) est inférieure à 0,3 g/cm³ et la taille moyenne des cellules de la mousse présente un diamètre moyen inférieur à 0,3 mm.

4. Profilé d'extrusion WPC (1) selon au moins l'une des revendications précédentes, **caractérisé en ce que** les fibres végétales incluent du bois, du chanvre, des fibres de palmier et/ou de la paille.

5. Profilé d'extrusion WPC (1) selon au moins l'une des revendications précédentes, **caractérisé en ce qu'**au moins une surface utile (4) présente une structure, notamment une structure rainurée.

6. Profilé d'extrusion WPC selon au moins l'une des revendications précédentes, **caractérisé en ce que** le composant WPC et le composant en mousse sont colorés et présentent en grande partie la même couleur de sorte que les surfaces de coupe du profilé donnent une impression d'homogénéité à l'œil nu.

7. Dispositif d'extrusion destiné à produire un profilé d'extrusion WPC (1) avec un matériau WPC dans lequel des fibres végétales sont noyées dans une matrice de matière synthétique, au moins selon l'une des revendications précédentes,
**caractérisé en ce que**
une extrudeuse principale (10) est utilisée pour la préparation de la formulation WPC et une co-extrudeuse (11) avec un dispositif de gazage (20) est utilisée pour la préparation de la masse de mousse, ce qui conduit à un processus de moussage avec un propulseur à action physique dans au moins une chambre creuse (6) du profilé d'extrusion WPC (1), la mousse (3) étant constituée du même type de matière synthétique que la matrice et le dispositif étant disposé de manière à ce que la densité de la mousse (3) soit inférieure à 0,4 g/cm³ et la taille moyenne des cellules de la mousse (3) ait un diamètre moyen inférieur à 0,4 mm et le dispositif de gazage (20) utilise un propulseur à action physique, notamment du CO₂, et
dans une buse (23) du dispositif d'extrusion un conduit d'alimentation (35) destiné à la masse de mousse traverse d'abord sans contact un conduit d'écoulement (37) destiné au WPC et se fond ensuite dans un conduit d'écoulement (34) destiné à la masse de mousse.

8. Dispositif d'extrusion selon la revendication 7, **caractérisé en ce que** l'extrudeuse principale (10) comporte une extrudeuse à double vis sans fin et/ou la coextrudeuse (11) comporte une extrudeuse à simple vis sans fin pour la préparation de la masse de mousse.

9. Dispositif d'extrusion selon la revendication 8, **caractérisé en ce que**, dans le dispositif de gazage (20), du CO₂ sous forme liquide peut être injecté sous pression dans la matière synthétique en fusion en tant que propulseur avec un débit de gaz précisément défini dans la zone de cylindre de la coextrudeuse (11) et le propulseur peut être finement réparti dans la masse de matière synthétique par l'effet de mélange dû à la rotation de la vis sans fin.

10. Dispositif d'extrusion selon au moins l'une des revendications 7 à 9, **caractérisé en ce qu'**il est prévu du côte de la sortie de la coextrudeuse (11) un refroidisseur de matière en fusion (21) destiné à abaisser la température de la masse et notamment en aval un mélangeur statique (22) destiné uniformiser dans une large mesure la température de la masse.

11. Dispositif d'extrusion selon au moins l'une des revendications 7 à 10, **caractérisé en ce que** les deux flux de matière en fusion provenant de l'extrudeuse principale (10) et de la coextrudeuse (11) sont réunis dans la buse (23), la buse (23) étant disposée en alignement avec l'extrudeuse principale et la co-extrudeuse transportant latéralement dans cette buse et, dans la buse (23), en particulier le conduit d'écoulement (37) destiné au profilé d'extrusion WPC correspondant dans une large mesure à celui pour des profilés à chambre creuse normaux.

12. Dispositif d'extrusion selon au moins l'une des revendications 7 à 11, **caractérisé en ce que** dans la buse (23) le conduit d'écoulement (34) pour la masse de mousse qui fait suite au conduit d'alimentation (35) s'élargit alors de manière à ce que la section transversale de la fente de sortie (33) pour la masse de mousse est d'environ 25 à 50 % de la section transversale de la chambre creuse (6) .

13. Dispositif d'extrusion selon au moins l'une des revendications 7 à 12, **caractérisé en ce que** le conduit d'écoulement (34) pour la masse de mousse soit débouche au ras de la surface frontale de la buse (23) soit est réuni au conduit d'écoulement (37) pour la masse WPC environ 3 à 20 mm en avant de la surface frontale de la buse (23).

14. Procédé d'extrusion destiné à la production de profilés d'extrusion WPC (1) selon au moins l'une des revendications 1 à 6 à l'aide du dispositif selon au moins l'une des revendications 7 à 13,
**caractérisé en ce que**
a) la formulation WPC est préparée par une extrudeuse principale (10) et
b) une coextrudeuse (11) avec un dispositif de gazage (20) est utilisée pour la préparation de la masse de mousse, ce qui conduit à un processus de moussage avec un propulseur à action physique dans au moins une chambre creuse (6) du profilé d'extrusion WPC (1), la mousse (3) ayant le même type de matière synthétique que la matrice de la formulation WPC ou étant constituée de celle-ci et le procédé étant conçu de telle sorte que la densité de la mousse (3) soit inférieure à 0,4 g/cm³ et la taille moyenne des cellules de la mousse (3) ait un diamètre moyen inférieur à 0,4 mm et ait et
c) le dispositif de gazage (20) utilise un propulseur à action physique, en particulier du CO₂.
